Europäisches Patentamt

European Patent Office

Office européen des brevets

(11) Numéro de publication: **0 298 342 B1**

(12) **FASCICULE DE BREVET EUROPEEN**

(45) Date de publication de fascicule du brevet:
**29.01.92**

(21) Numéro de dépôt: **88110279.2**

(22) Date de dépôt: **28.06.88**

(51) Int. Cl.⁵: **B63C 11/34**, G01M 7/00

(54) **Dispositif de freinage d'une capsule en fin de course.**

(30) Priorité: **29.06.87 LU 86933**

(43) Date de publication de la demande:
**11.01.89 Bulletin 89/02**

(45) Mention de la délivrance du brevet:
**29.01.92 Bulletin 92/05**

(84) Etats contractants désignés:
**BE DE ES FR GB GR IT LU NL**

(56) Documents cités:
**US-A- 3 699 689**

(73) Titulaire: **EUROPEAN ECONOMIC COMMUNITY E.E.C.**
**Bâtiment Jean Monnet Plateau du Kirchberg**
**L-2920 Luxembourg(LU)**

(72) Inventeur: **Murray, Charles N.**
**Via Milano, 14**
**I-21027 Ispra(IT)**
Inventeur: **Jamet, Michel R.**
**Via Don Guanella no. 19 fr. Barzola**
**Angera (VA)(IT)**

(74) Mandataire: **Weinmiller, Jürgen et al**
**Lennéstrasse 9 Postfach 24**
**W-8133 Feldafing(DE)**

## Description

L'invention se réfère à un dispositif de freinage sous-marin d'une capsule en fin de course rapide, cette capsule glissant par gravité sur un câble de guidage qui parcourt un canal axial de guidage de la capsule avant de frapper ledit dispositif se trouvant à l'extrémité inférieure de ce câble.

Dans certaines recherches sous-marines, on désire descendre une capsule instrumentée à très grande vitesse en grande profondeur de mer, telle que 1000 à 2000 m.

En fixant la capsule sur un cabestan au bord d'un navire, on obtient une vitesse insuffisante en considération du fait que le cabestan doit avoir un rouleau de cable d'une longueur de 1000 à 2000 m. Les vitesses ainsi réalisables ne dépassent pas quelques mètres par seconde. Une autre solution serait de faire descendre la capsule sur un câble de guidage par la force de la gravité et de prévoir un dispositif de freinage pour la capsule en fin de course. Toutefois, ce dispositif de freinage doit bien être ajusté pour assurer une décélération contrôlée de la capsule, car sinon, les forces transmises sur le câble lors d'un freinage trop brusque pourraient conduire à la rupture du cable ou la destruction des instruments de mesure.

L'invention a donc pour but de présenter un dispositif de freinage selon le préambule de la revendication 1, qui permet un calibrage fin de la décélération de la capsule et réduit ainsi le risque de rupture du câble tout en autorisant une vitesse maximale de descente proche à celle de la chute libre.

Selon l'invention, ce but est atteint par le fait que le dispositif de freinage sous-marin comporte une série de disques qui sont chacun fixés coaxialement sur ledit câble par des moyens de serrage individuels autorisant un glissement de ces disques sur le câble, si une force axiale limite est dépassée, et que le bout du câble est attaché à un cylindre d'amortissement qui coopère avec un piston fixé sur le câble par des moyens similaires aux moyens de serrage des disques, de sorte que le piston pénètre dans le cylindre sous la poussée du disque adjacent, la paroi du cylindre étant percée d'une pluralité de trous dont le diamètre décroit vers le fond du cylindre.

Pour éviter que le piston frappe le fond du cylindre, il est utile de prévoir un ressort dans ce cylindre s'appuyant d'une part sur le fond du cylindre, et d'autre part sur la face frontale du piston.

Pour améliorer la reproductibilité de la force de serrage des différents moyens de serrage, on a intérêt à recouvrir le câble d'une couche en plastique.

L'invention sera décrite ci-après plus en détail à l'aide d'un exemple de réalisation préféré et de deux figures.

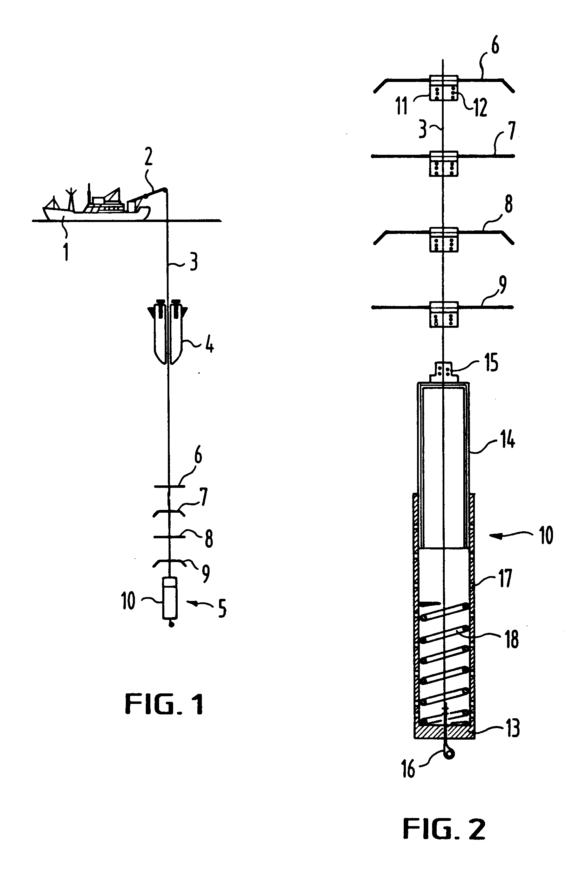

La fig. 1 montre un navire dont on fait descendre une capsule vers un dispositif de freinage selon l'invention.

La fig. 2 montre en coupe le dispositif de freinage de la fig. 1.

Un navire de recherche 1 porte sur un bras 2 un câble 3 vertical qui sert de câble de guidage pour une capsule 4. Cette capsule comporte par exemple une instrumentation pour la mesure de certaines données en grande profondeur, et elle doit descendre aussi vite que possible sur le câble 3 vers le bout 5 de celui-ci. La longueur du câble est par exemple de 2000 m et la capsule pèse par exemple 500 kg dans l'air, et elle a une densité moyenne de 2,7 g/cm$^3$. Le câble est constitué de 361 fils en acier à structure non torsive. Son diamètre est de 14 mm, plus une couche de 2,5 mm d'épaisseur en plastique, qui recouvre les fils d'acier. Un tel cable supporte un poids de 15 t environ, ce qui correspond au moins au double de la tension engendrée par une capsule de 500 kg qui s'arrête à <10 g (g étant l'accélération terrestre).

Le dispositif pour freiner la capsule en fin de course comporte d'une part plusieurs disques 6, 7, 8, 9, calés sur le câble 3, et d'autre part un système hydraulique d'amortissement 10. Les disques sont montés sur le câble à une distance mutuelle d'environ 2 m par des moyens de serrage tels que 11. Ces moyens de serrage comportent deux blocs en PVC ou matériau similaire, qui sont serrés par des vis 12 contre le câble et qui définissent la position du disque correspondant en absence de forces extérieures. Néanmoins, si la force axiale exercée sur un disque dépasse une valeur limite ajustée par les vis 12, ces blocs et le disque correspondant glissent le long du câble, ce mouvement étant freinée en outre par la quantité d'eau qui est à déplacer par le disque.

Les disques peuvent être des disques plats ou des disques en forme d'assiette inversée pour rendre l'échappement de l'eau plus difficile lorsqu'un disque glisse sur le cable. La force de serrage des blocs en PVC sur le câble est mesurée dynamométriquement sur les vis 12. Sa valeur est choisie expérimentalement.

Le dernier disque 9 est suivi par le système d'amortissement 10, qui est composé d'un cylindre 13 et d'un piston 14. Le piston est fixé sur le câble par des blocs en PVC 15 de la même façon que les disques, alors que le cylindre est fixé de façon rigide sur le bout du câble 16. La paroi cylindrique du cylindre 13 est percée d'une pluralité de trous tels que 17 dont le diamètre décroit vers le bas. A l'intérieur du cylindre, on voit en outre un ressort hélicoidal 18, qui s'appuie d'une part sur le fond du cylindre 13 et qui, d'autre part, peut venir en contact avec la face frontale du piston 14.

Le fonctionnement du dispositif selon l'invention est le suivant.

Lorsqu'une capsule 4 frappe le premier disque 6 après une chute libre le long du câble 3, la poussée exercée par la capsule sur ce disque est bien supérieure à celle fixée par les moyens de serrage correspondants. Par conséquent, ce disque 6 commence à glisser sur le câble et à freiner la capsule 4 en fonction de la friction entre le câble et les moyens de serrage et de l'inertie de l'eau se trouvant endessous de ce disque. Dès que le premier disque frappe le deuxième disque 7, la friction dans les moyens de serrage de ce disque s'ajoute aux forces de freinage précédentes. La vitesse de la capsule diminue et la force de friction augmente davantage, lorsque le troisième disque 8 commence à glisser, et ainsi de suite jusqu'au dernier disque 9, qui frappe enfin les moyens de serrage 15 du piston 14. A partir de ce moment, le piston 14 commence à pénétrer dans le cylindre 13 et chasse l'eau hors du cylindre à travers les trous 17. L'avancement du piston 14 fait réduire le nombre de trous par lesquels l'eau est chassée dehors, ce qui fait augmenter la force antagoniste à l'inertie de la capsule. Cette force est encore augmentée par la force du ressort 18 du moment où le piston commence à s'appuyer sur ce ressort.

Il est apparent que, par un serrage adéquat des moyens de serrage sur les disques et sur le piston, par un choix convenable du diamètre et de la disposition des trous dans le cylindre 13 ainsi que de la caractéristique du ressort 18 la force de freinage en fonction de l'avancement de la capsule peut être calibrée de telle sorte que la capsule arrive à l'arrêt sans avoir jamais exercé une force excédentaire sur le câble, force qui pourrait nuire au câble, à sa suspension ou à l'instrumentation installée dans la capsule 4.

Une application particulièrement intéressante du dispositif selon l'invention se trouve dans la simulation d'une pénétration d'une capsule dans les sédiments au fond de la mer. Avant qu'on puisse faire pénétrer une capsule instrumentée dans les sédiments au fond de la mer, il faut être sûr que les décélérations que subit la capsule lors de la pénétration dans les sédiments ne créent pas de forces nuisibles au bon fonctionnement ultérieur de l'instrumentation (batteries, détecteurs, émetteurs de signaux ultrasonors).A l'aide d'un dispositif selon l'invention, qui peut être étalonné convenablement, de tels essais peuvent être exécutés de façon à ce qu'ils simulent les effets de la pénétration d'une capsule dans les sédiments sous-marins après sa chute libre dans l'eau. Après un test de chute, on peut non seulement récupérer la capsule et analyser ses défauts éventuels en remontant le câble 3 sur un navire 1, mais on peut aussi mesurer le déplacement que les différents disques ont subis sur le câble et réajuster éventuellement la force de serrage des disques sur le câble.

## Revendications

1. Dispositif de freinage sous-marin d'une capsule en fin de course rapide, cette capsule glissant par gravité sur un câble de guidage qui parcourt un canal axial de guidage de la capsule avant de frapper ledit dispositif se trouvant à l'extrémité inférieure de ce câble, caractérisé en ce qu'il comporte une série de disques (6 à 9), qui sont chacun fixés coaxialement sur ledit câble (3) par des moyens de serrage individuels (11, 12) autorisant un glissement de ces disques sur le câble, si une force axiale limite est dépassée, et que le bout du câble (16) est attaché à un cylindre d'amortissement (13), qui coopère avec un piston (14) fixé sur le câble par des moyens (15) similaires aux moyens de serrage des disques de sorte que le piston pénètre dans le cylindre sous la poussée du disque adjacent (8), la paroi du cylindre (13) étant percée d'une pluralité de trous (17) dont le diamètre décroit vers le fond du cylindre.

2. Dispositif selon la revendication 1, caractérisé en ce que le cylindre d'amortissement (13) comporte un ressort (18) qui s'appuie d'une part sur le fond du cylindre (13) et qui, d'autre part, peut venir en contact avec la face frontale du piston (14).

3. Dispositif selon l'une des revendications précédentes, caractérisé en ce que le câble est recouvert d'une couche en plastique.

4. Dispositif selon l'une des revendications précédentes, caractérisé en ce que les moyens de serrage individuels comportent deux blocs (11) en PVC qui sont réunis autour du câble par des vis (12).

## Claims

1. A submarine braking device for slowing down a capsule at the end of fast movement, this capsule gliding by gravity along a guiding cable which passes through an axial guiding channel of the capsule before hitting said device which is situated at the lower end of this cable, characterized by the fact that it comprises a series of disks (6 to 9) which are each fixed coaxially on said cable (3) by individual squeezing means (11, 12) authorizing a gliding of these disks on the cable, if an axial impact threshold is exceeded, and that the end of the cable (16) is attached to a shock-absorbing cylinder (13) which cooperates with a piston (14) fixed to the cable by means (15) similar to the disk squeezing means, so that the piston penetrates into the cylinder under the impact of the adjacent disk (8), the wall of the cylinder (13) having a plurality of holes (17), the diameter of which decreases towards the bottom of the cylinder.

2. A device according to claim 1, characterized in that the shock-absorbing cylinder (13) comprises a sprang (18) which on the one hand bears against the bottom of the cylinder (13) and may on the other hand be applied against the front face of the piston (14).

3. A device according to any one of the preceding claims, characterized in that the cable is covered with a plastic layer.

4. A device according to any one of the preceding claims, characterized in that the individual squeezing means comprise two blocks (11) made of PVC which are assembled by screws (12) around the cable.

**Patentansprüche**

1. Vorrichtung zum Bremsen einer Kapsel unter Wasser am Ende einer schnellen Bewegung, wobei diese Kapsel durch Schwerkraft auf einem Leitkabel gleitet, das einen axialen Leitkanal der Kapsel durchquert, bevor es auf diese Vorrichtung auftrifft, die sich am unteren Ende dieses Kabels befindet, dadurch gekennzeichnet, daß sie eine Reihe von Scheiben (6 bis 9) aufweist, die je durch individuelle Einspannmittel (11, 12) koaxial auf diesem Kabel (3) befestigt sind, welche ein Gleiten dieser Scheiben auf dem Kabel erlauben, wenn eine axiale Grenzkraft überschritten wird, und daß das Ende des Kabels (16) an einen Stoßdämpferzylinder (13) befestigt ist, der mit einem Kolben (14) zusammenwirkt, welcher auf dem Kabel durch Mittel (15) ähnlich den Einspannmitteln der Scheiben befestigt ist, so daß der Kolben durch dem Stoß der ihm benachbarten Scheibe (8) in den Zylinder eindringt, wobei die Wand des Zylinders (13) eine Vielzahl von Löchern (17) aufweist, deren Durchmesser sich in Richtung des Zylinderbodens verringert.

2. Vorrichtung nach Anspruch 1, dadurch gekennzeichnet, daß der Stoßdämpferzylinder (13) eine Feder (18) aufweist, die sich einerseits auf dem Boden des Zylinders (13) abstützt und die andererseits mit der Vorderseite des Kolbens (14) in Berührung treten kann.

3. Vorrichtung nach einem der vorhergehenden Ansprüche, dadurch gekennzeichnet, daß das Kabel mit einer Schicht aus Kunststoffmaterial überzogen ist.

4. Vorrichtung nach einem der vorhergehenden Ansprüche, dadurch gekennzeichnet, daß die individuellen Einspannmittel zwei Blöcke (11) aus PVC aufweisen, die durch Schrauben (12) um das Kabel herum zusammengebaut sind.

FIG. 1

FIG. 2